# EUROPEAN PATENT APPLICATION

(11) **EP 4 488 726 A1**
(43) Date of publication of application: **08.01.2025**
(21) Application number: 23760183.6
(22) Date of filing: 27.02.2023
(51) Int. Cl.: G02B 5/18, G02B 1/11, G02B 1/14, G02B 27/02

(54) **OPTICAL MEMBER AND AR GLASSES AND HEAD-MOUNTED DISPLAY USING SAID OPTICAL MEMBER**

(30) Priority: 28.02.2022 JP 2022029602; 24.02.2023 JP 2023027543
(71) Applicant: Nitto Denko Corporation, Ibaraki-shi, Osaka 567-8680 (JP)
(72) Inventor: KOMOTO, Yusuke, Ibaraki-shi, Osaka 567-8680 (JP); SHIBUYA, Akihiro, Ibaraki-shi, Osaka 567-8680 (JP); TAKEMOTO, Hiroyuki, Ibaraki-shi, Osaka 567-8680 (JP); HATTORI, Daisuke, Ibaraki-shi, Osaka 567-8680 (JP); MORISHIMA, Ryota, Ibaraki-shi, Osaka 567-8680 (JP)
(74) Representative: Hoffmann Eitle
(86) International application number: PCT/JP2023/007137
(87) International publication number: WO 2023/163185

(57) **Abstract**

There is provided an optical member for AR that is thin and lightweight, is bright, and is suppressed in light leakage. An optical member according to at least one embodiment of the present invention includes: an optical waveguide having a first main surface and a second main surface; an optical element arranged on at least one main surface of the first main surface or the second main surface, the optical element having an uneven structure; a porous layer arranged on at least a main surface of the optical waveguide on which the optical element is arranged; and a pressure-sensitive adhesive layer arranged on a side of the porous layer opposite to the optical waveguide, the pressure-sensitive adhesive layer having a thickness of 3 um or more.

## Description

### Technical Field

The present invention relates to an optical member, and a pair of AR glasses and a head-mounted display each using the optical member.

### Background Art

In recent years, a so-called augmented reality (AR) technology has attracted attention. AR typically includes "virtually augmenting" the world in sight by displaying virtual visual information superimposed on a real landscape. Along with the development of AR, a pair of AR glasses and a head-mounted display (HMD) to be used in AR have been developed. An optical member including a waveguide is typically used as each of the pair of AR glasses and the HMD. However, such optical member has problems in that the optical member is thick, heavy, and dark, and that light leakage is liable to be caused by, for example, water or dirt, and thus various issues remain to be considered for its practical use.

### Citation List

### Patent Literature

[PTL 1] US 2017/0131545 A1
[PTL 2] US 2020/0379184 A1

### Summary of Invention

### Technical Problem

The present invention has been made to solve the above-mentioned problems of the related art, and a primary object of the present invention is to provide an optical member for AR that is thin and lightweight, is bright, and is suppressed in light leakage.

### Solution to Problem

An optical member according to at least one embodiment of the present invention includes: an optical waveguide having a first main surface and a second main surface; an optical element arranged on at least one main surface of the first main surface or the second main surface, the optical element having an uneven structure; a porous layer arranged on at least a main surface of the optical waveguide on which the optical element is arranged; and a pressure-sensitive adhesive layer arranged on a side of the porous layer opposite to the optical waveguide, the pressure-sensitive adhesive layer having a thickness of 3 um or more.

In one embodiment, the porous layer has a refractive index of 1.20 or less.

In one embodiment, the porous layer has a thickness of 5 um or less.

In one embodiment, the porous layer has a haze of less than 5%.

In one embodiment, the pressure-sensitive adhesive layer has a storage modulus of elasticity of 0.2×10⁵ (Pa) or more.

In one embodiment, the optical member further includes a protective layer formed of a resin film having a thickness of 20 um or more on an outside of the pressure-sensitive adhesive layer.

In one embodiment, the protective layer has a Young's modulus of 2 GPa or more.

In one embodiment, the optical member further includes a hard coat layer on an outside of the protective layer.

In one embodiment, the optical member further includes an antireflection layer on an outside of the hard coat layer.

According to another aspect of the present invention, there is provided a pair of AR glasses. The pair of AR glasses includes the optical member as described above.

According to still another aspect of the present invention, there is provided a head-mounted display. The head-mounted display includes the optical member as described above.

### Advantageous Effects of Invention

According to the embodiment of the present invention, the optical member for AR that is thin and lightweight, is bright, and is suppressed in light leakage can be achieved.

### Brief Description of Drawings

FIG. **1** is a schematic sectional view of an optical member according to one embodiment of the present invention.
FIG. **2** is a schematic sectional view of an optical member according to another embodiment of the present invention.
FIG. **3** is a schematic sectional view of an optical member according to still another embodiment of the present invention.

### Description of Embodiments

Embodiments of the present invention are described below. However, the present invention is not limited to these embodiments. For ease of viewing, the drawings are schematic illustrations. Thus, the thickness and size of each of constituent elements of an optical member and a ratio between, for example, the thicknesses of the constituent elements in the drawings are different from actual values.

### A. Overall Configuration of Optical Member

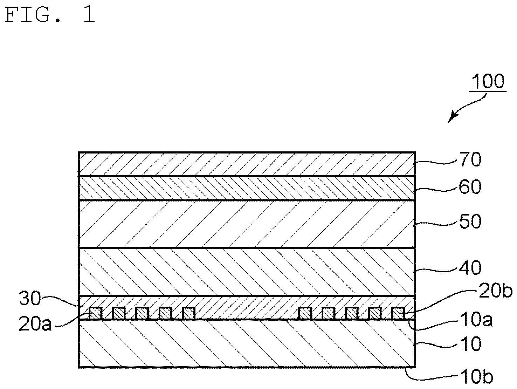

FIG. **1** is a schematic sectional view of an optical member according to one embodiment of the present invention. An optical member **100** of the illustrated example includes an optical waveguide **10,** optical elements **20a** and **20b,** a porous layer **30,** and a pressure-sensitive adhesive layer **40.** The optical waveguide **10** includes a first main surface **10a** and a second main surface **10b.** The optical elements **20a** and **20b** each have an uneven structure (the optical elements **20a** and **20b** are hereinafter sometimes referred to as "uneven optical elements"). The uneven optical elements **20a** typically function as incident optical elements of the optical waveguide, and the uneven optical elements **20b** typically function as emitting optical elements of the optical waveguide. The uneven optical elements **20a** and **20b** are arranged on at least one main surface of the first main surface **10a** or second main surface **10b** of the optical waveguide **10.** The uneven optical elements **20a** and **20b** may be arranged on the same main surface of the optical waveguide, or may be arranged on the main surfaces thereof different from each other. In the illustrated example, the uneven optical elements **20a** and **20b** are arranged on the first main surface **10a** of the optical waveguide **10.** The porous layer **30** is arranged on at least a main surface of the optical waveguide **10** on which the uneven optical elements **20a** and **20b** are arranged (in the illustrated example, the first main surface **10a**). The porous layer **30** is typically arranged so as to cover the uneven optical elements **20a** and **20b,** and in one embodiment, the porous layer **30** is arranged on substantially the whole surface of the main surface of the optical waveguide **10** on which the uneven optical elements **20a** and **20b** are arranged (in the illustrated example, the first main surface **10a).** The pressure-sensitive adhesive layer **40** is arranged on the side of the porous layer **30** opposite to the optical waveguide **10** (that is, the outside surface of the porous layer). The thickness of the pressure-sensitive adhesive layer is 3 um or more. With such configuration, an optical member for AR that is thin and lightweight, is bright, and is suppressed in light leakage can be achieved.

A protective layer **50,** a hard coat layer **60,** and/or an antireflection layer **70** may be arranged on the outside (side opposite to the porous layer **30)** of the pressure-sensitive adhesive layer **40** as required. In the illustrated example, the protective layer **50,** the hard coat layer **60,** and the antireflection layer **70** are arranged in the stated order from the pressure-sensitive adhesive layer **40** side. At least one of the protective layer **50,** the hard coat layer **60,** or the antireflection layer **70** may be omitted in accordance with purposes and desired configurations. When the protective layer, the hard coat layer, and the antireflection layer are not arranged, a release liner (not shown) is preferably temporarily bonded to the surface of the pressure-sensitive adhesive layer **40** until the optical member is used. When the release liner is temporarily bonded, the pressure-sensitive adhesive layer can be protected, and an optical film can be formed into a roll shape.

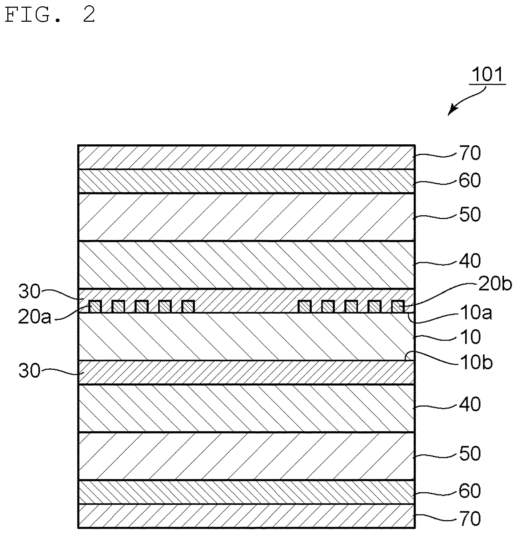

FIG. **2** is a schematic sectional view of an optical member according to another embodiment of the present invention. In an optical member **101** of the illustrated example, the porous layer **30** and the pressure-sensitive adhesive layer **40** are arranged on not only the main surface of the optical waveguide **10** on which the uneven optical elements **20a** and **20b** are arranged (in the illustrated example, the first main surface **10a)** but also the main surface thereof on which the uneven optical elements are not arranged (in the illustrated example, the second main surface **10b).** In the illustrated example, the protective layers **50** and **50,** the hard coat layers **60** and **60,** and the antireflection layers **70** and **70** are arranged outside the pressure-sensitive adhesive layers **40** and **40** in the stated order from the pressure-sensitive adhesive layer side, but part or the whole thereof may be omitted in the same manner as in the embodiment of FIG. **1****.**

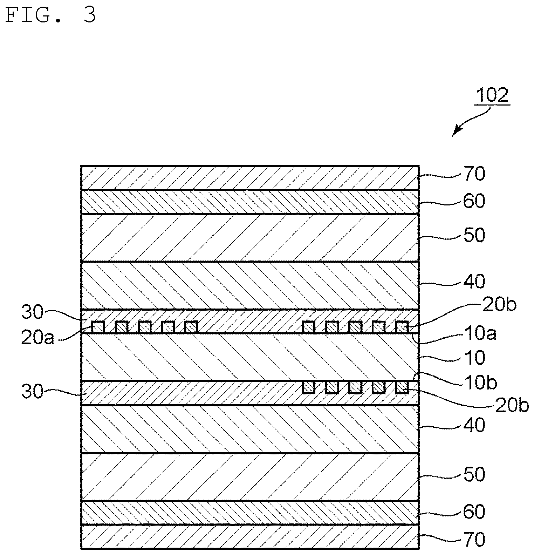

FIG. **3** is a schematic sectional view of an optical member according to still another embodiment of the present invention. In an optical member **102** of the illustrated example, the uneven optical elements **20b** are arranged on not only the first main surface **10a** of the optical waveguide **10** but also the second main surface **10b** thereof. The embodiment is the same as the embodiment of FIG. **2** except for the foregoing.

The total light transmittance of the optical member is preferably 60% or more and 99% or less, more preferably 70% or more and 98% or less, still more preferably 80% or more and 97% or less. In addition, the haze of the optical member is preferably 0.1% or more and 3% or less, more preferably 0.2% or more and 2.5% or less, still more preferably 0.3% or more and 2% or less. According to the embodiment of the present invention, excellent transparency can be achieved in the entirety of the optical member. As a result, the optical member may be suitably used for a pair of AR glasses and a HMD (the pair of AR glasses and the HMD are hereinafter sometimes collectively referred to as "pair of AR glasses or the like").

The thickness of the optical member is preferably from 0.35 mm to 4.8 mm, more preferably from 0.55 mm to 3.8 mm, still more preferably from 0.75 mm to 2.8 mm. According to the embodiment of the present invention, the optical member may be formed without use of a thick cover glass. Thus, the thickness of the optical member can be reduced to about one-fifth, and as a result, the weight thereof can also be reduced to about one-third, as compared to a related-art optical member for a pair of AR glasses, which uses a cover glass. As a result, the optical member may be suitably used for the pair of AR glasses or the like. The term "thickness of the optical member" as used herein means a total thickness from one outermost layer of the optical member to the other outermost layer thereof. For example, in the embodiment of FIG. **1****,** the thickness of the optical member is a thickness from the outside surface of the antireflection layer to the second main surface of the optical waveguide. In addition, for example, in each of the embodiments of FIG. **2** and FIG. **3****,** the thickness of the optical member is a thickness from the outside surface of one of the antireflection layers to the outside surface of the other antireflection layer.

The above-mentioned embodiments may be appropriately combined and may be appropriately modified. For example, in each of the embodiments illustrated in FIG. **1** and FIG. **2****,** any one of the uneven optical elements **20a** or **20b** may be arranged on the second main surface **10b** of the optical waveguide. In the embodiment illustrated in FIG. **3****,** the uneven optical elements **20a** may be arranged on the second main surface **10b** of the optical waveguide. In each of the embodiments illustrated in FIG. **1** to FIG. **3****,** the uneven optical elements **20a** may be arranged on both of the first main surface **10a** and the second main surface **10b** of the optical waveguide.

Constituent elements of the optical member are described in detail below.

### B. Optical Waveguide

The optical waveguide 10 is typically configured so that light that has entered the optical waveguide propagates in the optical waveguide through utilization of total reflection to be emitted at a predetermined position in a predetermined direction. The optical waveguide **10** includes the first main surface **10a** and the second main surface **10b** as described above. When the optical member is used for the pair of AR glasses or the like, light from an image source (not shown) (typically projection light of an image) passes the incident optical elements (the uneven optical elements **20a** of the illustrated example) arranged on the first main surface and/or the second main surface to enter the optical waveguide. The incident light propagates in the optical waveguide by the total reflection, passes the emitting optical elements (the uneven optical elements **20b** of the illustrated example) arranged on the first main surface and/or the second main surface to be emitted, and is viewed by a user of the pair of AR glasses or the like. When the uneven optical elements **20a** and **20b** are appropriately formed, the light from the image source is emitted while image information is maintained. As a result, an image from the image source may be viewed by the user of the pair of AR glasses or the like.

The optical waveguide may be formed of glass or may be formed of a plastic. The refractive index of the optical waveguide is preferably from 1.4 to 2.5, more preferably from 1.6 to 2.4, still more preferably from 2.0 to 2.3. When the refractive index falls within such ranges, satisfactory light incidence from the outside, satisfactory light emission to the outside, and satisfactory total reflection inside the optical waveguide can be achieved. The Abbe number of the optical waveguide is preferably 10 or more and 80 or less, more preferably 15 or more and 70 or less.

The thickness unevenness (total thickness variation: TTV) of the optical waveguide (the first main surface and the second main surface) is preferably 5 pm or less, more preferably 3 um or less, still more preferably 1 um or less. The thickness unevenness is preferably as small as possible, and may be, for example, zero. When the thickness unevenness of the optical waveguide falls within such ranges, a strain in an optical path in the optical waveguide can be reduced.

The surface roughness Ra of the optical waveguide (the first main surface and the second main surface) is preferably 10 nm or less, more preferably 5 nm or less, still more preferably 1 nm or less. When the surface roughness Ra falls within such ranges, a haze can be reduced. Such surface roughness Ra can be achieved by, for example, polishing the first main surface and second main surface of the optical waveguide. Meanwhile, the surface roughness Ra may be, for example, 0.1 nm or more. The Ra refers to an arithmetic average roughness based on JIS B 0601.

The optical waveguide may be used alone, or two or more (e.g., two, three, or four) of the optical waveguides may be used by being laminated. The thickness of the optical waveguide may be, for example, from 0.3 mm to 4.0 mm. The thickness of the optical waveguide may be, for example, from 0.3 mm to 1.3 mm, may be, for example, from 0.4 mm to 1.2 mm, or may be, for example, from 0.5 mm to 1.1 mm. Alternatively, the thickness of the optical waveguide may be, for example, from 1.3 mm to 2.0 mm, may be, for example, from 1.4 mm to 1.9 mm, or may be, for example, from 1.5 mm to 1.8 mm. Alternatively, the thickness of the optical waveguide may be, for example, from 2.0 mm to 4.0 mm, may be, for example, from 2.2 mm to 3.8 mm, or may be, for example, from 2.4 mm to 3.6 mm.

### C. Optical Element

The uneven optical elements **20a** are configured so as to guide the light that has entered the optical waveguide from the image source in a waveguide direction, and the uneven optical elements **20b** are configured so as to emit the light that has propagated in the optical waveguide in a viewable direction. The uneven optical elements **20a** and **20b** are hereinafter sometimes collectively referred to simply as "uneven optical elements." When it is required to distinguish between the uneven optical elements **20a** and the uneven optical elements **20b,** the elements are specified by the respective reference symbols. However, even when the uneven optical elements **20a** and **20b** are collectively referred to as "uneven optical elements," the uneven optical elements **20a** and **20b** may have the same configuration, or may have configurations different from each other.

Any appropriate fine uneven shape that can express a light direction-changing function, such as light diffusion, light scattering, light reflection, or light diffraction, may be adopted as the uneven structure of each of the uneven optical elements. Typical examples of the uneven optical elements include a diffraction grating, a hologram element, and a metasurface. The diffraction grating is described below as an example of the uneven optical elements.

In the diffraction grating, a diffraction pattern is typically formed by a groove or a slit. The diffraction pattern may be appropriately set in accordance with purposes. The diffraction pattern may be a one-dimensional diffraction pattern that is a stripe shape in plan view, or may be a two-dimensional diffraction pattern that is a grid shape in plan view. In the one-dimensional diffraction pattern, typically, protrusions and slits each extending in one direction are alternately formed. The sectional shape of each of the protrusions when seen from the direction in which the protrusions extend may be a rectangle, may be a parallelogram (slanted), or may be a trapezoid. The one-dimensional diffraction pattern may have an uneven shape that has a corrugated section and extends in one direction. In the one-dimensional diffraction pattern, the direction in which stripes extend may be parallel to the waveguide direction of the light, may be a direction perpendicular to the waveguide direction of the light, or may be an oblique direction that defines a predetermined angle with respect to the waveguide direction of the light. In the two-dimensional diffraction pattern, slits may be arranged so as to form protrusions that are rectangles in plan view, and slits may be arranged so as to form protrusions that are parallelograms in plan view. The above-mentioned diffraction patterns may be appropriately combined. For example, two one-dimensional diffraction patterns having different directions in which the stripes extend (e.g., the directions in which the stripes extend are perpendicular to each other) may be combined, or three diffraction patterns including such two one-dimensional diffraction patterns and the two-dimensional diffraction pattern may be combined.

The pitch Λ of the unevenness is preferably from 30 nm to 700 nm, more preferably from 40 nm to 600 nm, still more preferably from 50 nm to 500 nm. The width of each of the protrusions and the slits (recesses) may be 1/2 of the pitch, or may not be 1/2 of the pitch (may have any appropriate width in accordance with purposes). The height "h" of the unevenness is preferably from 10 nm to 800 nm, more preferably from 20 nm to 700 nm, still more preferably from 30 nm to 600 nm, particularly preferably from 40 nm to 500 nm.

The uneven optical elements may be formed integrally with the optical waveguide or may be separately formed on the optical waveguide. When the uneven optical elements are formed integrally with the optical waveguide, the uneven optical elements may be formed by, for example, cutting the optical waveguide. Alternatively, for example, in the case of an optical waveguide made of a plastic, the uneven optical elements may be formed by nanoimprinting. When the uneven optical elements are separately formed on the optical waveguide, the uneven optical elements may be typically formed of a dielectric or a resin. Specific examples of the dielectric include alumina, titania, and silicon. The refractive index of the dielectric is preferably from 1.6 to 4.0, more preferably from 2.0 to 3.5. When the uneven optical elements are formed of the dielectric, the uneven optical elements may be formed by, for example, sputtering. Specific examples of the resin include a thermosetting resin and a UV-curable resin. The refractive index of such resin is preferably from 1.5 to 1.9. When the uneven optical elements are formed of the resin, the uneven optical elements may be formed by, for example, applying the resin as a thin film onto the optical waveguide, followed by nanoimprinting. When the uneven optical elements are each the metasurface, the uneven optical elements may be formed by, for example, a method described in the following literature. "Supplementary Section 2. Details of experiments" in Supplementary Information of A broadband achromatic metalens in the visible (Nature Nanotechnology volume 13, pages 227-232 (2018)).

### D. Porous Layer

The porous layer **30** typically has pores therein. The porosity of the porous layer is preferably 35 vol% or more, more preferably 38 vol% or more, particularly preferably 40 vol% or more. When the porosity falls within such ranges, a porous layer having a particularly low refractive index can be formed. The upper limit of the porosity of a low-refractive index layer is, for example, 90 vol% or less, preferably 75 vol% or less. When the porosity falls within such ranges, a porous layer excellent in strength can be formed. The porosity is a value calculated from the value of the refractive index measured with an ellipsometer by using Lorentz-Lorenz's formula.

The refractive index of the porous layer is preferably 1.20 or less, more preferably 1.18 or less, still more preferably 1.16 or less, particularly preferably 1.14 or less. Meanwhile, the refractive index of the porous layer is preferably 1.05 or more, more preferably 1.08 or more, still more preferably 1.10 or more. When the porous layer having such refractive index is arranged on the main surface of the optical waveguide on which the uneven optical elements are arranged, light leakage can be suppressed with substantially no influence on the optical characteristics of the optical waveguide and the uneven optical elements. Further, the porous layer can be extremely thinned as described later, and hence can contribute to thinning and lightweighting of the optical member (as a result, a pair of AR glasses). In addition, when the refractive index of the porous layer falls within the above-mentioned ranges, a predetermined mechanical strength can be secured, and hence damage can be suppressed. The refractive index refers to a refractive index measured at a wavelength of 550 nm unless otherwise stated. The refractive index is a value measured by a method described in the section "(1) Refractive Index of Porous Layer" in Examples to be described later.

The total light transmittance of the porous layer is preferably from 85% to 99%, more preferably from 87% to 98%, still more preferably from 89% to 97%. When the porous layer having such refractive index is arranged on the main surface of the optical waveguide on which the uneven optical elements are arranged, excellent transparency can be secured while the effects based on the refractive index are expressed. As a result, the optical member may be suitably used for the pair of AR glasses or the like.

The haze of the porous layer is, for example, less than 5%, preferably less than 3%. Meanwhile, the haze is, for example, 0.1% or more, preferably 0.2% or more. When the porous layer having such haze is arranged on the main surface of the optical waveguide on which the uneven optical elements are arranged, excellent transparency can be secured while the effects based on the refractive index are expressed. As a result, the optical member may be suitably used for the pair of AR glasses or the like. The haze may be measured by, for example, such a method as described below.

The pore layer (porous layer) is cut into a size measuring 50 mm by 50 mm, and is set in a haze meter (manufactured by Murakami Color Research Laboratory Co., Ltd.: HM-150), followed by the measurement of its haze. The haze value is calculated from the following equation. Haze (%)=[diffuse transmittance (%)/total light transmittance (%)]×100 (%)

The thickness of the porous layer is preferably 5 um or less, more preferably 4 um or less, still more preferably 3 um or less, particularly preferably 2 um or less, especially preferably 1.5 um or less. Meanwhile, the thickness of the porous layer is preferably 300 nm or more, more preferably 400 nm or more, still more preferably 500 nm or more. When the thickness of the porous layer falls within such ranges, light leakage can be satisfactorily suppressed while excellent transparency is secured.

Any appropriate configuration may be adopted for the porous layer as long as the layer has the above-mentioned desired characteristics. The porous layer may be preferably formed through, for example, application or printing. Materials described in, for example, WO 2004/113966 A1, JP 2013-254183 A, and JP 2012-189802 A may each be adopted as a material for forming the porous layer. A typical example thereof is a silicon compound. Examples of the silicon compound include: silica-based compounds; hydrolyzable silanes, and partial hydrolysates and dehydration condensates thereof; silanol group-containing silicon compounds; and active silica obtained by bringing a silicate into contact with an acid or an ion-exchange resin. The examples also include: organic polymers; polymerizable monomers (e.g., a (meth)acrylic monomer and a styrene-based monomer); and curable resins (e.g., a (meth)acrylic resin, a fluorine-containing resin, and a urethane resin). Those materials may be used alone or in combination thereof. The porous layer may be formed by, for example, applying or printing a solution or a dispersion liquid of such material.

The size of each of the pores (holes) in the porous layer refers to a major axis diameter out of the major axis diameter and minor axis diameter of the pore (hole). The sizes of the pores (holes) are, for example, from 2 nm to 500 nm. The sizes of the pores (holes) are, for example, 2 nm or more, preferably 5 nm or more, more preferably 10 nm or more, still more preferably 20 nm or more. Meanwhile, the sizes of the pores (holes) are, for example, 500 nm or less, preferably 200 nm or less, more preferably 100 nm or less. The range of the sizes of the pores (holes) is, for example, from 2 nm to 500 nm, preferably from 5 nm to 500 nm, more preferably from 10 nm to 200 nm, still more preferably from 20 nm to 100 nm. The sizes of the pores (holes) may be adjusted to desired sizes in accordance with, for example, purposes and applications.

The sizes of the pores (holes) may be quantified by a BET test method. Specifically, 0.1 g of the sample (formed pore layer) is loaded into the capillary of a specific surface area-measuring apparatus (manufactured by Micromeritics Instrument Corporation, ASAP 2020), and is then dried under reduced pressure at room temperature for 24 hours so that a gas in its pore structure may be removed. Then, an adsorption isotherm is drawn by causing the sample to adsorb a nitrogen gas, and its pore size distribution is determined. Thus, the pore sizes may be evaluated.

The porous layer having the pores therein is, for example, a porous layer and/or a porous layer having an air layer in at least part thereof. The porous layer typically contains aerogel and/or particles (e.g., hollow fine particles and/or porous particles). The porous layer may be preferably a nanoporous layer (specifically a porous layer in which the diameters of 90% or more of micropores fall within the range of from 10⁻¹ nm to 10³ nm) .

Any appropriate particles may be adopted as the particles. The particles are each typically formed of a silica-based compound. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or may be branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope.

An example of the specific configuration of the porous layer is described below. The porous layer of this embodiment is formed of one or a plurality of kinds of constituent units each forming a fine pore structure, and the constituent units are chemically bonded to each other through a catalytic action. Examples of the shape of each of the constituent units include a particle shape, a fiber shape, a rod shape, and a flat plate shape. The constituent units may have only one shape, or may have two or more shapes in combination. In the following description, a case in which the porous layer is a pore layer of a porous body in which the microporous particles are chemically bonded to each other is mainly described.

Such pore layer may be formed by, for example, chemically bonding the microporous particles to each other in a pore layer-forming step. In the embodiment of the present invention, the shapes of the "particles" (e.g., the microporous particles) are not particularly limited. For example, the shapes may each be a spherical shape, or may each be any other shape. In addition, in the embodiment of the present invention, the microporous particles may be, for example, sol-gel beaded particles, nanoparticles (hollow nanosilica nanoballoon particles), or nanofibers. The microporous particles each typically contain an inorganic substance. Specific examples of the inorganic substance include silicon (Si), magnesium (Mg), aluminum (Al), titanium (Ti), zinc (Zn), and zirconium (Zr) . Those inorganic substances may be used alone or in combination thereof. In one embodiment, the microporous particles are, for example, microporous particles of a silicon compound, and the porous body is, for example, a silicone porous body. The microporous particles of the silicon compound each contain, for example, a pulverized body of a gel-like silica compound. In addition, another form of the porous layer and/or the porous layer having the air layer in at least part thereof is, for example, a pore layer having the following features: the layer is formed of fibrous substances such as nanofibers; and the fibrous substances are entangled with each other to form pores, thereby forming the layer. A method of producing such pore layer is not particularly limited, and is the same as that in the case of, for example, the pore layer of the porous body in which the microporous particles are chemically bonded to each other. Still another form thereof is, for example, a pore layer using hollow nanoparticles or nanoclay, or a pore layer formed by using hollow nanoballoons or magnesium fluoride. The pore layer may be a pore layer formed of a single constituent substance, or may be a pore layer formed of a plurality of constituent substances. The pore layer may include any one of the above-mentioned forms, or may include two or more of the above-mentioned forms.

In this embodiment, the porous structure of the porous body may be, for example, an open-cell structural body in which hole structures are continuous with each other. The open-cell structural body means, for example, that the hole structures are three-dimensionally continuous with each other in the silicone porous body, and can be said to be a state in which the internal pores of the hole structures are continuous with each other. When the porous body has an open-cell structure, its porosity can be increased. However, when closed-cell particles (particles each individually having a hole structure) such as hollow silica are used, an open-cell structure cannot be formed. Meanwhile, for example, when silica sol particles (pulverized products of a gel-like silicon compound that forms sol) are used, the particles each have a three-dimensional dendritic structure, and hence the dendritic particles are sedimented and deposited in a coating film (coating film of the sol containing the pulverized products of the gel-like silicon compound). Accordingly, an open-cell structure can be easily formed. The porous layer more preferably has a monolith structure in which an open-cell structure includes a plurality of pore size distributions. The monolith structure means, for example, a hierarchical structure including a structure in which nanosized fine pores are present and an open-cell structure in which the nanosized pores assemble. When the monolith structure is formed, both of film strength and a high porosity may be achieved by, for example, imparting the high porosity to the layer through use of a coarse open-cell pore while imparting the film strength thereto through use of a fine pore. Such monolith structure may be preferably formed by controlling the pore size distribution of a pore structure to be produced in the gel (gel-like silicon compound) at a stage before its pulverization into the silica sol particles. In addition, the monolith structure may be formed by, for example, controlling the particle size distribution of the silica sol particles after the pulverization to a desired size at the time of the pulverization of the gel-like silicon compound.

The porous layer contains, for example, the pulverized products of a gel-like compound as described above, and the pulverized products are chemically bonded to each other. The form of the chemical bond (chemical bonding) between the pulverized products in the porous layer is not particularly limited, and examples thereof include a cross-linking bond, a covalent bond, and a hydrogen bond.

The volume-average particle diameter of the pulverized products in the porous layer is, for example, 0.10 um or more, preferably 0.20 um or more, more preferably 0.40 um or more. Meanwhile, the volume-average particle diameter is, for example, 2.00 um or less, preferably 1.50 um or less, more preferably 1.00 um or less. The range of the volume-average particle diameter is, for example, from 0.10 um to 2.00 um, preferably from 0.20 um to 1.50 µm, more preferably from 0.40 um to 1.00 um. The particle size distribution of the pulverized products may be measured with, for example, a particle size distribution-evaluating apparatus based on a dynamic light scattering method, a laser diffraction method, or the like, and an electron microscope, such as a scanning electron microscope (SEM) or a transmission electron microscope (TEM). The volume-average particle diameter is an indicator of a variation in particle size of the pulverized products.

The kind of the gel-like compound is not particularly limited. The gel-like compound is, for example, a gel-like silicon compound.

In addition, in the porous layer (pore layer), for example, silicon atoms to be incorporated preferably form a siloxane bond. As a specific example, the ratio of unbonded silicon atoms (in other words, residual silanol groups) out of all the silicon atoms in the pore layer is, for example, less than 50%, preferably 30% or less, more preferably 15% or less.

An example of a method of forming such porous layer is described below.

The method typically includes: a precursor-forming step of forming a pore structure, which is a precursor of the porous layer (pore layer), on an optical waveguide; and a cross-linking reaction step of causing a cross-linking reaction in the precursor after the precursor-forming step. The method further includes: a containing liquid-producing step of producing a containing liquid containing microporous particles (hereinafter sometimes referred to as "microporous particle-containing liquid" or simply "containing liquid"); and a drying step of drying the containing liquid. In the precursor-forming step, the microporous particles in a dried body are chemically bonded to each other to form the precursor. The containing liquid is not particularly limited, and is, for example, a suspension containing the microporous particles. In the following description, a case in which the microporous particles are pulverized products of the gel-like compound, and the pore layer is a porous body (preferably a silicone porous body) containing the pulverized products of the gel-like compound is mainly described. However, even when the microporous particles are products other than the pulverized products of the gel-like compound, the porous layer may be similarly formed.

According to the above-mentioned method, for example, a porous layer (pore layer) having an extremely low refractive index is formed. A reason for the foregoing is assumed to be, for example, as described below. However, the assumption does not limit the method of forming the porous layer.

The above-mentioned pulverized products are obtained by pulverizing the gel-like silicon compound, and hence a state in which the three-dimensional structure of the gel-like silicon compound before the pulverization is dispersed in a three-dimensional basic structure is established. Further, in the above-mentioned method, the application of the crushed products of the gel-like silicon compound onto the resin film results in the formation of the precursor of a porous structure based on the three-dimensional basic structure. In other words, according to the method, a new porous structure (three-dimensional basic structure) different from the three-dimensional structure of the gel-like silicon compound is formed by the application of the pulverized products. Accordingly, in the pore layer to be finally obtained, such a low refractive index that the layer functions to the same extent as, for example, an air layer does may be achieved. Further, in the above-mentioned method, the three-dimensional basic structure is fixed because the pulverized products are chemically bonded to each other. Accordingly, the pore layer to be finally obtained can maintain sufficient strength and sufficient flexibility despite the fact that the layer is a structure having pores.

Details about the specific configuration of the porous layer and the method of forming the porous layer are described in, for example, WO 2019/151073 A1, the description of which is incorporated herein by reference.

### E. Pressure-sensitive Adhesive Layer

The pressure-sensitive adhesive layer 40 has such hardness that under a normal state, a pressure-sensitive adhesive for forming the pressure-sensitive adhesive layer does not permeate the pores of the porous layer. Accordingly, the storage modulus of elasticity of the pressure-sensitive adhesive layer at 23°C is preferably 0.2×10⁵ (Pa) or more, more preferably 0.4×10⁵ (Pa) or more, still more preferably 0.6×10⁵ (Pa) or more, particularly preferably 0.8×10⁵ (Pa) or more, especially preferably 1.0×10⁵ (Pa) or more. Meanwhile, in consideration of the durability of the pressure-sensitive adhesive layer, the storage modulus of elasticity of the pressure-sensitive adhesive layer at 23°C is preferably 5.0×10⁷ (Pa) or less, more preferably 4.0×10⁷ (Pa) or less, still more preferably 3.0×10⁷ (Pa) or less, particularly preferably 2.0×10⁷ (Pa) or less, especially preferably 1.0×10⁷ (Pa) or less. In addition, for example, the storage modulus of elasticity of the pressure-sensitive adhesive layer at 23°C may be 1.0×10⁶ (Pa) or less. Such pressure-sensitive adhesive layer has a buffer function (cushion function) to an external force, and such softness that damage to the porous layer can be suppressed. The storage modulus of elasticity is determined by reading a value at 23°C at the time of measurement in conformity with a method described in JIS K 7244-1 "Plastics-Determination of dynamic mechanical properties" under the condition of a frequency of 1 Hz in the range of from -50°C to 150°C at a rate of temperature increase of 5°C/min.

Any appropriate pressure-sensitive adhesive may be used as the pressure-sensitive adhesive for forming the pressure-sensitive adhesive layer as long as the pressure-sensitive adhesive has such characteristics as described above. The pressure-sensitive adhesive is typically, for example, an acrylic pressure-sensitive adhesive (acrylic pressure-sensitive adhesive composition). The acrylic pressure-sensitive adhesive composition typically contains a (meth)acrylic polymer as a main component (base polymer). The (meth)acrylic polymer may be incorporated into the pressure-sensitive adhesive composition at a ratio of, for example, 50 wt% or more, preferably 70 wt% or more, more preferably 90 wt% or more in the solid content of the pressure-sensitive adhesive composition. The (meth)acrylic polymer contains, as a main component, an alkyl (meth)acrylate serving as a monomer unit. The term "(meth)acrylate" refers to an acrylate and/or a methacrylate. The alkyl group of the alkyl (meth)acrylate is, for example, a linear or branched alkyl group having 1 to 18 carbon atoms. The average number of carbon atoms of the alkyl group is preferably from 3 to 9. As a monomer for forming the (meth)acrylic polymer, in addition to the alkyl (meth)acrylate, there are given comonomers, such as a carboxyl group-containing monomer, a hydroxyl group-containing monomer, an amide group-containing monomer, an aromatic ring-containing (meth)acrylate, and a heterocycle-containing (meth)acrylate. The comonomer is preferably a hydroxyl group-containing monomer and/or a heterocycle-containing (meth)acrylate, more preferably N-acryloylmorpholine. The acrylic pressure-sensitive adhesive composition may preferably contain a silane coupling agent and/or a cross-linking agent. The silane coupling agent is, for example, an epoxy group-containing silane coupling agent. The cross-linking agent is, for example, an isocyanate-based cross-linking agent or a peroxide-based cross-linking agent. Details about such pressure-sensitive adhesive layer or acrylic pressure-sensitive adhesive composition are described in, for example, JP 4140736 B2, the description of which is incorporated herein by reference.

The thickness of the pressure-sensitive adhesive layer is 3 um or more as described above, and is preferably 10 um or more, more preferably 25 pm or more, still more preferably 30 um or more, particularly preferably 40 um or more. When the thickness of the pressure-sensitive adhesive layer falls within such ranges, the damage to the porous layer can be satisfactorily suppressed, and as a result, light leakage can be satisfactorily suppressed while the optical characteristics of the optical waveguide and the uneven optical elements are satisfactorily maintained. When the thickness of the pressure-sensitive adhesive layer is 15 um or more, the above-mentioned effects are obtained, and hence there is no particular limitation on the upper limit of the thickness. However, the thickness of the pressure-sensitive adhesive layer may be, for example, 200 um or less, may be, for example, 150 um or less, or may be, for example, 120 um or less from the viewpoints of the thinning and lightweighting, and cost.

### F. Protective Layer

The thickness of the protective layer 50 is preferably 20 um or more, more preferably 25 µm or more, still more preferably 30 um or more. Meanwhile, the thickness of the protective layer is preferably 200 um or less, more preferably 150 um or less, still more preferably 120 um or less. When the thickness of the protective layer falls within such ranges, when the optical member is applied to the pair of AR glasses or the like, the damage to the porous layer can be suppressed while excellent surface protective performance is imparted.

The Young's modulus of the protective layer **50** is preferably 2 GPa or more, more preferably 2.5 GPa or more, still more preferably 3 GPa or more. Meanwhile, the Young's modulus of the protective layer is preferably 10 GPa or less, more preferably 9 GPa or less, still more preferably 8 GPa or less. When the Young's modulus of the protective layer falls within such ranges, when the optical member is applied to the pair of AR glasses or the like, the damage to the porous layer can be suppressed while excellent surface protective performance is imparted.

The protective layer **50** is formed of any appropriate resin film. A material for forming the resin film is, for example, a (meth)acrylic resin, a cellulose-based resin, such as diacetyl cellulose or triacetyl cellulose, a cycloolefin-based resin such as a norbornene-based resin, an olefin-based resin such as polypropylene, an ester-based resin such as a polyethylene terephthalate-based resin, a polyamide-based resin, a polycarbonate-based resin, or a copolymer resin thereof. The term "(meth)acrylic resin" refers to an acrylic resin and/or a methacrylic resin.

The moisture permeability of the protective layer **50** is preferably from 0.1 g/m²/24 hr to 1,000 g/m²/24 hr, more preferably from 0.5 g/m²/24 hr to 800 g/m²/24 hr, still more preferably from 1 g/m²/24 hr to 500 g/m²/24 hr. When the moisture permeability of the protective layer falls within such ranges, the damage to the porous layer can be further suppressed.

### G. Hard Coat Layer

The hard coat layer **60** has a pencil hardness of preferably H or more, more preferably 2H or more, still more preferably 3H or more. Meanwhile, the pencil hardness of the hard coat layer is preferably 6H or less, more preferably 5H or less. When the pencil hardness of the hard coat layer falls within such ranges, when the optical member is applied to the pair of AR glasses or the like, the damage to the porous layer can be suppressed while excellent surface protective performance is imparted. The pencil hardness may be measured on the basis of JIS K 5400 "Pencil Hardness Test."

The thickness of the hard coat layer may be, for example, from 0.5 um to 30 µm, may be, for example, from 1 um to 20 µm, or may be, for example, from 2 um to 15 um. When the thickness of the hard coat layer falls within such ranges, when the optical member is applied to the pair of AR glasses or the like, the damage to the porous layer can be suppressed while excellent surface protective performance is imparted.

The hard coat layer may be formed of any appropriate material as long as the layer satisfies such characteristics as described above. The hard coat layer may be, for example, the cured layer of the thermosetting resin or the resin curable with an ionizing radiation (e.g., visible light or UV light). Of those, a UV-curable resin is preferred. This is because the hard coat layer can be formed by a simple operation and with high efficiency. Specific examples of the UV-curable resin include a polyester-based UV-curable resin, a (meth)acrylic UV-curable resin, a urethane-based UV-curable resin, an amide-based UV-curable resin, a silicone-based UV-curable resin, an epoxy-based UV-curable resin, and an unsaturated polyester-based UV-curable resin. The (meth)acrylic UV-curable resin encompasses urethane (meth)acrylate, polyester (meth)acrylate, and epoxy (meth)acrylate. The UV-curable resin may include a UV-curable monomer, a UV-curable oligomer, and a UV-curable polymer. A preferred example of the UV-curable resin is a resin composition containing an acrylic monomer component or oligomer component having preferably 2 or more, more preferably 3 to 6 UV-polymerizable functional groups. The UV-curable resin typically has blended therein a photopolymerization initiator.

The hard coat layer may be formed by any appropriate method. The hard coat layer may be preferably formed by applying a resin composition for forming a hard coat layer onto the protective layer, drying the composition, and irradiating the dried coating film with UV light to cure the film.

Details about the hard coat layer are described in, for example, JP 2011-237789 A and JP 2016-224443 A, the descriptions of which are incorporated herein by reference.

### H. Antireflection Layer

Any appropriate configuration may be adopted as the configuration of the antireflection layer **70.** Typical examples of the configuration of the antireflection layer include: (1) a single layer of a low-refractive index layer having an optical thickness of from 120 nm to 140 nm and having a refractive index of from about 1.35 to about 1.55; (2) a laminate including a medium-refractive index layer, a high-refractive index layer, and the low-refractive index layer in the stated order from the optical waveguide side; and (3) an alternately multilayered laminate of the high-refractive index layer and the low-refractive index layer.

As a material that may form the low-refractive index layer, there are given, for example, silicon oxide (SiO₂) and magnesium fluoride (MgF₂). The refractive index of the low-refractive index layer is typically from about 1.35 to about 1.55. As a material that may form the high-refractive index layer, there are given, for example, titanium oxide (TiO₂), niobium oxide (Nb₂O₂ or Nb₂O₅), tin-doped indium oxide (ITO), antimony-doped tin oxide (ATO), and ZrO₂-TiO₂. The refractive index of the high-refractive index layer is typically from about 1.60 to about 2.20. As a material that may form the medium-refractive index layer, there are given, for example, titanium oxide (TiO₂) and a mixture (e.g., mixture of titanium oxide and silicon oxide) of the material that may form the low-refractive index layer and the material that may form the high-refractive index layer. The refractive index of the medium-refractive index layer is typically from about 1.50 to about 1.85. The thickness of each of the low-refractive index layer, the medium-refractive index layer, and the high-refractive index layer may be set so that an appropriate optical thickness in accordance with, for example, the layer structure or desired antireflection performance of the antireflection layer is achieved.

The antireflection layer described above is typically formed by a dry process. Specific examples of the dry process include a physical vapor deposition (PVD) method and a chemical vapor deposition (CVD) method. Examples of the PVD method include a vacuum vapor deposition method, a reactive vapor deposition method, an ion beam assisted deposition method, a sputtering method, and an ion plating method. An example of the CVD method is a plasma CVD method. Of those, a sputtering method is preferred. This is because a more uniform film having small thickness unevenness can be formed.

The thickness of the antireflection layer described above is, for example, from about 20 nm to about 300 nm.

The antireflection layer **70** may be a cured layer of a resin composition curable with an ionizing radiation. The resin composition curable with an ionizing radiation contains the resin curable with an ionizing radiation. Typical examples of the resin curable with an ionizing radiation include a thermosetting resin, a UV-curable resin, a resin curable with light (visible light), and an electron beam-curable resin. Examples of the resin curable with an ionizing radiation include a silicone resin, a polyester resin, a polyether resin, an epoxy resin, a urethane resin, an alkyd resin, a spiroacetal resin, a polybutadiene resin, and a polythiol polyene resin. In addition, for example, the resin curable with an ionizing radiation may be a curable compound having an acrylate group and/or a methacrylate group curable with heat, light (e.g., UV light), or an electron beam. Specific examples thereof include an oligomer and a prepolymer of an acrylate and/or a methacrylate of a polyfunctional compound such as a polyhydric alcohol. The resins curable with ionizing radiations may be used alone or in combination thereof. The resin composition curable with an ionizing radiation may further contain a reactive diluent, a fluorine element-containing additive, hollow particles, and/or solid particles in accordance with purposes. The antireflection layer of this embodiment may be typically formed by the following production method: applying a coating liquid for forming an antireflection layer obtained by diluting the resin composition curable with an ionizing radiation with a diluent solvent; drying a coating film; and curing the dried coating film. The thickness of the antireflection layer of this embodiment may be, for example, from 0.1 um to 50 µm, may be, for example, from 0.3 um to 40 µm, may be, for example, from 0.5 um to 30 µm, may be, for example, from 1.0 um to 20 µm, or may be, for example, from 2.0 um to 10 um.

### Examples

The present invention is specifically described below by way of Examples. However, the present invention is not limited to these Examples. Measurement methods for characteristics are as described below. In addition, "%" and "part(s)" in Examples are by weight unless otherwise stated.

### (1) Refractive Index of Porous Layer

A porous layer was formed on an optical waveguide. After that, the resultant was cut into a piece having a size measuring 50 mm by 50 mm, and the piece was bonded to the front surface of a glass plate (thickness: 3 mm) via a pressure-sensitive adhesive layer. A central portion (having a diameter of about 20 mm) on the back surface of the glass plate was daubed with a black marker pen. Thus, a sample in which light was not reflected on the back surface of the glass plate was obtained. The sample was set in an ellipsometer (manufactured by J.A. Woollam Japan: VASE), and its refractive index was measured under the conditions of a wavelength of 550 nm and an incident angle of from 50° to 80°.

### (2) Protection of Optical Waveguide

### (2-1) Pencil Hardness

A pencil hardness was measured on the basis of JIS K 5400 "Pencil Hardness Test" except that a load of 500 g was applied.

### (2-2) White Blurring of Image

A predetermined image was input and output via an optical member obtained in each of Examples and Comparative Examples, and an output image was visually observed. The observed image was compared to an output image from the optical waveguide alone of Reference Example 1, and was evaluated by the following criteria.
o (Satisfactory): No whiteness was observed.
× (Unsatisfactory): Whiteness was observed.

### (2-3) Surface Contamination Resistance

An output image was visually observed in the same manner as in the section (2-2) under a state in which 0.1 ml of a water droplet was dropped to the surface of the optical member obtained in each of Examples and Comparative Examples, and was evaluated by the following criteria.
o (Satisfactory): No image disturbance or light leakage was observed.
× (Unsatisfactory): Image disturbance and/or light leakage was observed.

### [Production Example 1] Preparation of Coating Liquid for forming Porous Layer

### (1) Gelation of Silicon Compound

0.95 g of methyltrimethoxysilane (MTMS) that was a precursor of a silicon compound was dissolved in 2.2 g of dimethyl sulfoxide (DMSO). Thus, a mixed liquid A was prepared. 0.5 g of a 0.01 mol/L aqueous solution of oxalic acid was added to the mixed liquid A, and the mixture was stirred at room temperature for 30 minutes so that MTMS was hydrolyzed. Thus, a mixed liquid B containing tris(hydroxy)methylsilane was produced.

0.38 g of 28 wt% ammonia water and 0.2 g of pure water were added to 5.5 g of DMSO, and then the mixed liquid B was further added to the mixture, followed by stirring at room temperature for 15 minutes to perform the gelation of tris(hydroxy)methylsilane. Thus, a mixed liquid C containing a gel-like silicon compound was obtained.

### (2) Aging Treatment

Aging treatment was performed by incubating the mixed liquid C containing the gel-like silicon compound, which had been prepared as described above, as it was at 40°C for 20 hours.

### (3) Pulverization Treatment

Next, the gel-like silicon compound subjected to the aging treatment as described above was crushed into granular shapes each having a size of from several millimeters to several centimeters with a spatula. Next, 40 g of isopropyl alcohol (IPA) was added to the mixed liquid C, and the mixture was lightly stirred. After that, the mixture was left at rest at room temperature for 6 hours, and the solvent and the catalyst in the gel were decanted. The same decantation treatment was performed three times to replace the solvent with IPA. Thus, a mixed liquid D was obtained. Next, the gel-like silicon compound in the mixed liquid D was subjected to pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound in the mixed liquid D and 1.15 g of IPA were weighed in a 5-cubic centimeter screw bottle, followed by the performance of the pulverization of the mixture under the conditions of 50 W and 20 kHz for 2 minutes.

The gel-like silicon compound in the mixed liquid D was pulverized by the pulverization treatment, and hence the mixed liquid D was turned into a sol liquid E of the pulverized products. A volume-average particle diameter representing a variation in particle size of the pulverized products in the sol liquid E was determined to be from 0.50 to 0.70 with a dynamic light scattering-type Nanotrac particle size analyzer (manufactured by Nikkiso Co., Ltd., model UPA-EX150). Further, a methyl ethyl ketone (MEK) solution of a photobase generator (Wako Pure Chemical Industries, Ltd.: product name: WPBG-266) having a concentration of 1.5 wt% and a MEK solution of bis(trimethoxysilyl)ethane having a concentration of 5% were added at ratios of 0.062 g and 0.036 g, respectively, to 0.75 g of the sol liquid E. Thus, a coating liquid for forming a porous layer was obtained.

### [Production Example 2] Preparation of Pressure-sensitive Adhesive for forming Pressure-sensitive Adhesive Layer

90.7 Parts of butyl acrylate, 6 parts of N-acryloylmorpholine, 3 parts of acrylic acid, 0.3 part of 2-hydroxybutyl acrylate, and 0.1 part of 2,2'-azobisisobutyronitrile serving as a polymerization initiator were loaded into a four-necked flask including a stirring blade, a temperature gauge, a nitrogen gas-introducing tube, and a condenser together with 100 g of ethyl acetate, and a nitrogen gas was introduced to purge the flask with nitrogen while the mixture was gently stirred. After that, while a liquid temperature in the flask was kept at around 55°C, a polymerization reaction was performed for 8 hours to prepare an acrylic polymer solution. 0.2 Part of an isocyanate cross-linking agent (CORONATE L manufactured by Nippon Polyurethane Industry Co., Ltd., tolylene diisocyanate adduct of trimethylolpropane), 0.3 part of benzoyl peroxide (NYPER BMT manufactured by Nippon Oil & Fats Co., Ltd.), and 0.2 part of γ-glycidoxypropylmethoxysilane (manufactured by Shin-Etsu Chemical Co., Ltd.: KBM-403) were blended into 100 parts of the solid content of the resultant acrylic polymer solution to prepare an acrylic pressure-sensitive adhesive solution. Next, the acrylic pressure-sensitive adhesive solution was applied to one surface of a silicone-treated polyethylene terephthalate (PET) film (manufactured by Mitsubishi Chemical Polyester Film Co., Ltd., thickness: 38 µm) so that the thickness of a pressure-sensitive adhesive layer after drying became 20 µm, followed by drying at 150°C for 3 minutes. Thus, the pressure-sensitive adhesive layer was formed. The resultant pressure-sensitive adhesive layer had a storage modulus of elasticity of 1.0×10⁵ (Pa) .

### [Example 1]

An optical waveguide was taken out from commercial AR glasses (manufactured by Vuzix, product name: "M4000"). The thickness of the optical waveguide was 1.05 mm. Further, a diffraction grating (uneven optical element) had been formed on the optical waveguide. The coating liquid for forming a porous layer prepared in Production Example 1 was applied to each of both surfaces of the optical waveguide. Coating films were subjected to drying treatment at a temperature of 100°C for 1 minute to form porous layers (thickness: 1.2 pm). The resultant porous layers each had a porosity of 60 vol% and a refractive index of 1.18. Next, the pressure-sensitive adhesive layer (thickness: 10 µm, storage modulus of elasticity: 1.3×10⁵ Pa) formed in Production Example 2 was transferred to each of the surfaces of the porous layers. Further, a PET film (manufactured by Mitsubishi Chemical Polyester Film Co., Ltd., thickness: 50 µm, modulus of elasticity: 4.0 GPa) serving as a protective layer was laminated on each of the surfaces of the pressure-sensitive adhesive layers. Thus, an optical member was produced. The resultant optical member was subjected to the above-mentioned evaluations. The results are shown in Table 1.

### [Example 2]

An optical member was produced in the same manner as in Example 1 except that a triacetyl cellulose (TAC) film (thickness: 80 µm, modulus of elasticity: 3.0 GPa) was used as each of the protective layers instead of the PET film. The resultant optical member was subjected to the same evaluations as those of Example 1. The results are shown in Table 1.

### [Comparative Example 1]

An optical member was produced in the same manner as in Example 1 except that no pressure-sensitive adhesive layer or protective layer was formed. The resultant optical member was subjected to the same evaluations as those of Example 1. The results are shown in Table 1.

### [Comparative Example 2]

An optical member was produced in the same manner as in Example 1 except that no porous layer was formed. The resultant optical member was subjected to the same evaluations as those of Example 1. The results are shown in Table 1.

### [Reference Example 1]

The optical waveguide alone was used as an optical member and subjected to the same evaluations as those of Example 1. The results are shown in Table 1.

### [Examples 3 to 7]

Optical members were each produced in the same manner as in Example 1 except that the thickness of the pressure-sensitive adhesive layer, the thickness of the protective layer, and the Young's modulus of the protective layer were changed as shown in Table 1. The resultant optical member was subjected to the same evaluations as those of Example 1. The results are shown in Table 1.

**Table 1**

| | Porous layer | Thickness of pressure-sensitive adhesive layer (µm) | Storage modulus of elasticity of pressure-sensitive adhesive layer (10⁵ Pa) | Thickness of protective layer (µm) | Young's modulus of protective layer (GPa) | Pencil hardness | White blurring of image | Surface contamination resistance |
|---|---|---|---|---|---|---|---|---|
| Example 1 | Present | 20 | 1.3 | 50 | 4 | 4H | ○ | ○ |
| Example 2 | Present | 20 | 1.3 | 80 | 3 | 3H | ○ | ○ |
| Comparative Example 1 | Present | Absent | - | Absent | - | B or less | ○ | ○ |
| Comparative Example 2 | Absent | 20 | 1.3 | 50 | 4 | 4H | × | × |
| Reference Example 1 | Absent | Absent | - | Absent | - | B or less | Reference | × |
| Example 3 | Present | 10 | 1.3 | 80 | 3 | 3H | ○ | ○ |
| Example 4 | Present | 10 | 1.3 | 50 | 4 | 4H | ○ | ○ |
| Example 5 | Present | 5 | 1.3 | 60 | 3 | 4H | ○ | ○ |
| Example 6 | Present | 5 | 1.3 | 80 | 3 | 3H | ○ | ○ |
| Example 7 | Present | 5 | 1.3 | 50 | 4 | 4H | ○ | ○ |

As is apparent from Table 1, according to Examples of the present invention, it is found that an optical member that is suppressed in contamination of the surface, and can achieve an output image suppressed in white blurring and light leakage is obtained. Further, each of the optical members of Examples has a total thickness of about 1.2 mm, and hence significant thinning (as a result, significant lightweighting) is achieved.

### Industrial Applicability

The optical member according to the embodiment of the present invention may be suitably used for a pair of AR glasses and a HMD.

### Reference Signs List

- **10**: optical waveguide
- **10a**: first main surface
- **10b**: second main surface
- **20a**: uneven optical element
- **20b**: uneven optical element
- **30**: porous layer
- **40**: pressure-sensitive adhesive layer
- **50**: protective layer
- **60**: hard coat layer
- **70**: antireflection layer
- **100**: optical member
- **101**: optical member
- **102**: optical member

## Claims

1. An optical member, comprising:
an optical waveguide having a first main surface and a second main surface;
an optical element arranged on at least one main surface of the first main surface or the second main surface, the optical element having an uneven structure;
a porous layer arranged on at least a main surface of the optical waveguide on which the optical element is arranged; and
a pressure-sensitive adhesive layer arranged on a side of the porous layer opposite to the optical waveguide, the pressure-sensitive adhesive layer having a thickness of 3 um or more.

2. The optical member according to claim 1, wherein the porous layer has a refractive index of 1.20 or less.

3. The optical member according to claim 1 or 2, wherein the porous layer has a thickness of 5 um or less.

4. The optical member according to any one of claims 1 to 3, wherein the porous layer has a haze of less than 5%.

5. The optical member according to any one of claims 1 to 4, wherein the pressure-sensitive adhesive layer has a storage modulus of elasticity of 0.2×10⁵ (Pa) or more.

6. The optical member according to any one of claims 1 to 5, further comprising a protective layer formed of a resin film having a thickness of 20 um or more on an outside of the pressure-sensitive adhesive layer.

7. The optical member according to claim 6, wherein the protective layer has a Young's modulus of 2 GPa or more.

8. The optical member according to claim 6 or 7, further comprising a hard coat layer on an outside of the protective layer.

9. The optical member according to claim 8, further comprising an antireflection layer on an outside of the hard coat layer.

10. A pair of AR glasses, comprising the optical member of any one of claims 1 to 9.

11. A head-mounted display, comprising the optical member of any one of claims 1 to 9.
